# EUROPEAN PATENT SPECIFICATION

(11) **EP 3 923 232 B1**
(45) Date of publication and mention of the grant of the patent: **18.02.2026**
(21) Application number: 19914248.0
(22) Date of filing: 04.02.2019
(51) Int. Cl.: G05B 19/418, G06Q 10/101, G06Q 50/10, G06Q 50/04

(54) **SHAPE DATA SHARING SYSTEM AND SHAPE DATA SHARING METHOD**
SYSTEM ZUM TEILEN VON FORMDATEN UND VERFAHREN ZUM TEILEN VON FORMDATEN
SYSTÈME DE PARTAGE DE DONNÉES DE FORME ET PROCÉDÉ DE PARTAGE DE DONNÉES DE FORME

(43) Date of publication of application: 15.12.2021
(73) Proprietor: Fuji Corporation, Chiryu-shi, Aichi 472-8686 (JP)
(72) Inventor: KITO Shuichiro, Chiryu-shi, Aichi 472-8686 (JP); OIKE Hiroshi, Chiryu-shi, Aichi 472-8686 (JP); SUZUKI Mikiya, Chiryu-shi, Aichi 472-8686 (JP)
(74) Representative: Grünecker Patent- und Rechtsanwälte PartG mbB
(86) International application number: PCT/JP2019/003845
(87) International publication number: WO 2020/161764

(56) References cited:
- JP-A- 2003 234 900
- JP-A- 2008 016 011
- JP-A- 2008 016 011
- JP-A- H0 643 921
- US-A1- 2015 334 889

## Description

### Technical Field

The present specification relates to a shape data sharing system and a shape data sharing method for sharing shape data of components used for a mounting work of a component mounter.

### Background Art

A technique for mass-producing a board product by performing a board work on a board on which printed wiring is applied has become widespread. As a typical example of a board working machine for performing the board work, the component mounter for performing a component mounting work is included. In general, the component mounter uses component data created for each type of component to be used to proceed with the mounting work. The component data includes shape data including information related to a shape of the component. One example of technique related to the management of this type of shape data is disclosed in Patent Literature 1.

Patent Literature 1 discloses a management system in which a computer of a provider and a user of component information (shape data) are connected to a host computer and manages component library data used for a component mounter. The management system includes a means for accepting registration of a provider and a user, a component library management database for generalizing and storing component information, and a search engine for searching the database and disclosing the component information to the user. Then, the verified component information that has finished a mounting test at the own factory is registered in the component library management database. With the above, it is said that a maker can provide new services by opening the component information to the maker using the component and promoting reuse.

JP 2008/016011 A relates to component data distribution for data relating to mounting components in component mounters via a server. Such data may include data relating to the shape of the components and data relating to mounting statistics or data relating to the mounting setup.

US 2015 0334889 A1 relates to collecting operation information on a plurality of component mounting lines and showing the information on a portable terminal.

### Patent Literature

Patent Literature 1: JP-A-2003-323487

### Summary of the Invention

### Technical Problem

By the way, in Patent Literature 1, the verified shape data is opened to the maker who produces the board product. However, sufficient reliability cannot always be obtained in practice by merely saying that the verification has been completed. For example, when structures of the component mounter for performing the mounting work are different, or types of a feeder and a suction nozzle used in the mounting work are different, the reliability of the mounting work changes. Therefore, even when a satisfactory mounting work is performed in a specific component mounter used for the verification, the shape data at that time cannot always be applied to other component mounters. Accordingly, it is preferable to associate and share shape data having a usage record and equipment information on the component mounter which has performed the mounting work.

On the other hand, the shape data held by each maker often includes information on the use of the component or information for in-house management. In other words, the shape data includes information that each maker does not want to disclose. As a result, the sharing of the shape data is obstructed, so that the shape data is individually created for each maker. Accordingly, the creation, verification, correction, and the like of the shape data becomes inefficient. Further, it takes time to start the mounting work, and it is necessary to adjust the shape data even after the start of the mounting work.

An object of the present specification is to provide a shape data sharing system and a shape data sharing method capable of sharing shape data with high reliability.

The invention is defined by the features of the independent claims. Any reference to inventions or embodiments not falling within the scope of the independent claims are to be interpreted as examples useful for understanding the invention.

### Advantageous Effect of the Invention

In the shape data sharing system and the shape data sharing method described in the present specification, registration data in which the component specification information and the equipment information on the component mounter are added to the shape data owned by the data provider and having the usage record is provided and managed on the database. Then, the registration data extracted from the database by the search is supplied to the data user, so that the shape data is shared. Accordingly, the highly reliable shape data having the usage record is shared.

### Brief Description of Drawings

Fig. 1 is a plan view schematically showing a configuration example of a component mounter to which a shape data sharing system according to an embodiment is applied.
Fig. 2 is a block diagram showing a configuration of a shape data sharing system according to an embodiment.
Fig. 3 is a diagram simply showing a data configuration of registration data.
Fig. 4 is a diagram showing an operation flow related to provision of registration data in a shape data sharing system of an embodiment.
Fig. 5 is a diagram of a detailed flow illustrating details of creation of registration data in the operation flow shown in Fig. 4.
Fig. 6 is a diagram showing an operation flow related to the use of registration data in a shape data sharing system of an embodiment.
Fig. 7 is a diagram showing an example of a search screen when searching for registration data.
Fig. 8 is a diagram showing an example of a screen displaying a search result of registration data

### Description of Embodiments

### 1. Configuration example of component mounter 1

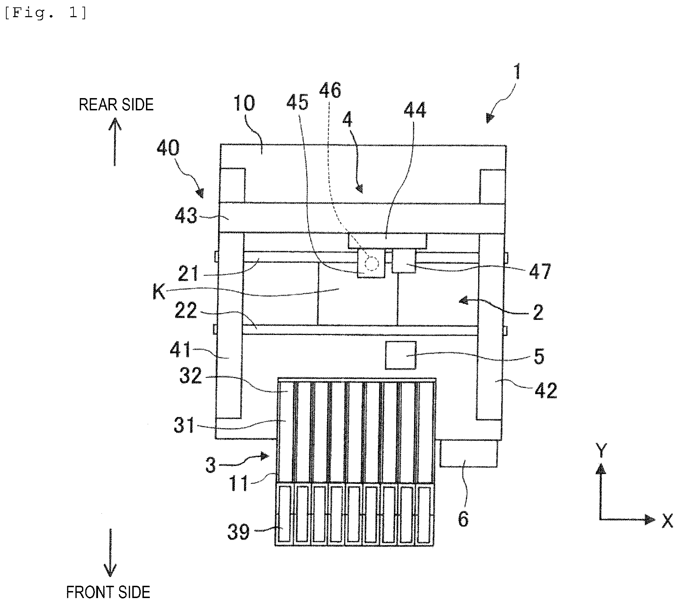

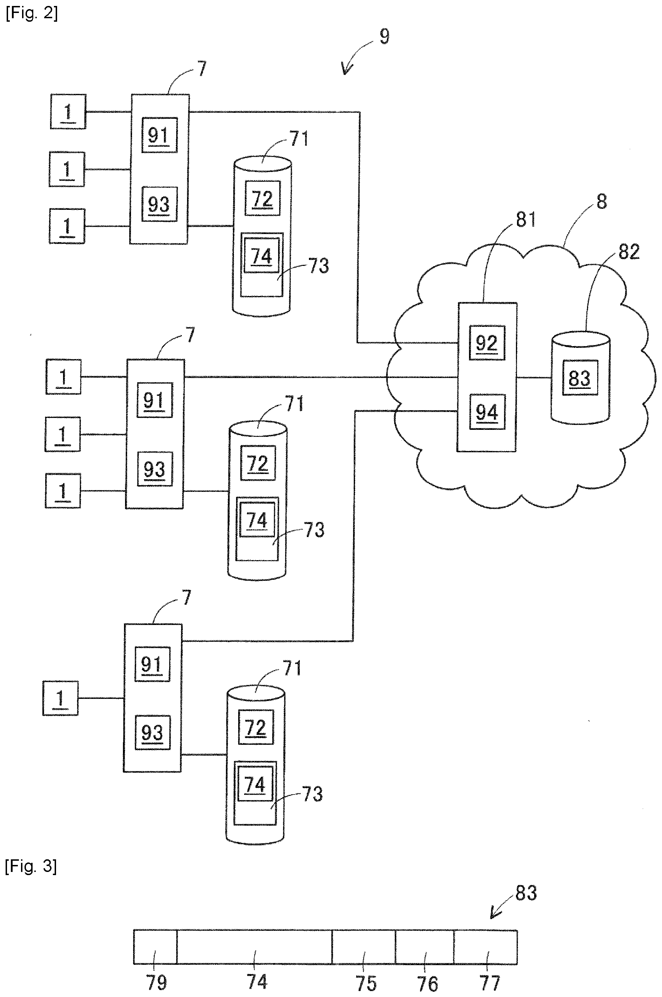

First, a configuration example of component mounter 1 using shape data 74 (refer to Fig. 2) will be described with reference to Fig. 1. Component mounter 1 performs a mounting work of mounting a component on board K. In Fig. 1, a direction from the left side to the right side of the sheet is an X-axis direction for conveying board K, and a direction from the lower side (front side) to the upper side (rear side) of the sheet is a Y-axis direction. Component mounter 1 is configured by assembling board conveyance device 2, multiple feeders 3, component transfer device 4, camera device 5, control device 6, and the like on base 10. As shown in Fig. 2, shape data 74 is stored and managed in storage device 71 of management computer 7, and can be accessed from component mounter 1.

Board conveyance device 2 includes a pair of guide rails 21, 22, a pair of conveyor belts, a board clamping mechanism, and the like. By rolling along guide rails 21 and 22 while board K is placed, the conveyor belts convey board K in a work execution position. The board clamping mechanism pushes up board K at the work execution position to clamp and position board K. When the component mounting work is ended, the board clamping mechanism releases board K. Subsequently, the conveyor belts convey board K out.

Multiple feeders 3 are detachably installed in multiple groove-shaped slots provided in pallet member 11 on base 10. In each feeder 3, tape reel 39 is loaded from the front side of main body portion 31. Predetermined supply position 32 for supplying components is set in an upper portion closer to the rear side of main body portion 31. A carrier tape, in which each of components is housed in multiple cavities, is wound around tape reel 39. Feeder 3 intermittently feeds the carrier tape by a tape feeding mechanism (not shown) to set the components at supply position 32. As a result, feeder 3 sequentially performs the supplying operation of the components.

Component transfer device 4 is installed above board conveyance device 2 and feeder 3. Component transfer device 4 picks up components from feeder 3 and mounts the components to board K. Component transfer device 4 includes head driving mechanism 40, moving body 44, mounting head 45, suction nozzle 46, mark camera 47, and the like. Head driving mechanism 40 is configured to include a pair of Y-axis rails 41 and 42, Y-axis slider 43, and a driving motor (not shown). Y-axis rails 41 and 42 extend in the Y-axis direction and are spaced apart from each other and disposed in parallel. Long Y-axis slider 43 in the X-axis direction is laid across both Y-axis rails 41 and 42 and moves in the Y-axis direction. Moving body 44 is laid on Y-axis slider 43 and moves in the X-axis direction. Head driving mechanism 40 drives Y-axis slider 43 in the Y-axis direction and drives moving body 44 on Y-axis slider 43 in the X-axis direction.

Moving body 44 holds mounting head 45 and mark camera 47. Mounting head 45 holds one or multiple suction nozzles 46 on the lower side, and is driven by head driving mechanism 40 to move in two horizontal directions. Suction nozzle 46 performs a lifting and lowering operation by being driven by a lifting and lowering driving section (not shown). Suction nozzle 46 descends from above supply position 32, and performs a suction operation of the components by supplying a negative pressure. In addition, suction nozzle 46 is driven above board K, and performs a mounting operation of the components by supplying a positive pressure. There are multiple types of mounting heads 45 and suction nozzles 46, and they are automatically or manually exchanged. Instead of suction nozzle 46, a chuck that holds the components may be used. By imaging a position mark attached to positioned board K, mark camera 47 detects an accurate work execution position of board K.

Camera device 5 is provided on an upper surface of base 10 between board conveyance device 2 and feeder 3 so as to face upward. Camera device 5 images the components in a state in which suction nozzle 46 is picked up while moving body 44 is moved from feeder 3 to board K. The acquired image data is subjected to image processing, and a suction orientation of the components is acquired as an image processing result. The image processing result is reflected in the mounting operation of suction nozzle 46.

Control device 6 is assembled to base 10, and an installation position of control device 6 is not particularly limited. Control device 6 is configured with a computer device having a CPU and operated with software. Control device 6 may be configured by distributing and disposing multiple CPUs in the machine. Control device 6 controls the component mounting work in accordance with job data 72 received from management computer 7. Job data 72 differs depending on the type of board product to be produced.

### 2. Shape data 74

Next, shape data 74 to be shared by shape data sharing system 9 of the embodiment will be described. Component mounter 1 performs the mounting work by repeating a suction mounting cycle. The suction mounting cycle refers to a series of works in which mounting head 45 moves above feeder 3, so that suction nozzle 46 picks up the components, mounting head 45 moves above camera device 5, so that camera device 5 performs imaging, and mounting head 45 moves above board K, so that suction nozzle 46 mounts the components on board K. Shape data 74 is referenced when the image data acquired by camera device 5 is subjected to image processing or when suction nozzle 46 performs the mounting operation.

Shape data 74 includes information related to the shape of the components, for example, a size of the longitudinal and horizontal heights of the components, an allowable error of the size, a position of a lead, an appearance color, and the like. The shape data may include imaging conditions such as a shutter speed when imaged by camera device 5 or lighting conditions. By using proper shape data 74 for the image processing, the presence or absence of the components picked up by suction nozzle 46, an error in the type, or the like can be accurately determined, so that the suction orientation of the components is acquired with high accuracy. **In** addition, shape data 74 is referenced when suction nozzle 46 performs the mounting operation and the error of the suction orientation of the components is corrected.

Multiple types of shape data 74 may be created for one type of components. For example, even in a case where components of the same type having the same electrical characteristics and external shapes, shape data 74 may be created differently for each type of board product. **In** addition, for example, in a case where components of the same type are procured from multiple component manufacturers, shape data 74 may be generated differently for each component manufacturer.

Shape data 74 is a part of component data 73. Component data 73 includes, in addition to shape data 74, handling data describing a handling method of the components, packaging data describing a packaging mode of the components, and the like. By referring to the handling data, a movement speed of mounting head 45, a lifting and lowering speed of suction nozzle 46, and the like are properly controlled. **In** addition, when the number of packages in the packaging data is referenced, component shortage in feeder 3 is notified in advance.

When an operator uses a new component having no usage record, it is necessary to create shape data 74 and component data 73. **In** the conventional art, the operator creates shape data 74 that is oriented toward an ideal shape of components based on a specification (data sheet) acquired from a component manufacturer, an applicable standard, a measurement result obtained by actually measuring the components, and the like. Thereafter, shape data 74 is verified and provided for actual usage.

However, in newly created shape data 74, the frequency of occurrence of image processing errors may increase, so that the discard rate of components may increase. For example, even in a case where the suction operation of suction nozzle 46 is normally performed, since the image data changes according to the imaging condition of camera device 5, a difference occurs between the shape of the components in the image and the ideal shape of shape data 74, so that the image processing errors occur. **In** this case, the operator corrects or adjusts shape data 74. As a result, the efforts of the operator are required, and the production of the board product is interrupted. As a solution against these problems, shape data sharing system 9 of the embodiment is used.

### 3. Configuration of shape data sharing system 9 of embodiment

As shown in Fig. 2, management computer 7 is provided for the purpose of managing one or more component mounters 1. Management computer 7 collectively manages a board working machine other than component mounter 1 constituting the production line of the board product. Storage device 71 is attached to management computer 7. Management computer 7 stores and manages component data 73 including job data 72 and shape data 74 of multiple types of board products in storage device 71. Shape data sharing system 9 is configured by combining multiple management computers 7 and cloud server 8.

Multiple management computers 7 may be provided respectively in multiple different enterprises or in multiple factories of the same enterprise. Each enterprise or each factory may be either a data provider or a data user. Each management computer 7 is communicatively connected to cloud server 8. As a connection method, an Internet connection using a public wireless line, a connection using a dedicated wired line, or the like can be used.

Cloud server 8 is a computer device that allows access by a user to whom a license agreement is made. Cloud server 8 includes cloud control section 81 connected to management computer 7, and database 82 capable of managing various data. Cloud server 8 may be replaced with another computer device, for example, a server held by a manufacturer of component mounter 1. By using cloud server 8, the initial cost of the computer device becomes unnecessary and the running cost is also reduced.

Shape data sharing system 9 includes data provision section 91 and data search section 93 provided in each management computer 7, and data management section 92 and data sharing section 94 provided in cloud control section 81. Data provision section 91, data search section 93, data management section 92, and data sharing section 94 are functional sections realized by software. The four functional sections may be disposed anywhere in the system. Further, the four functional sections may be configured such that a part of the function overlaps with each other or a part of the function complements each other.

Data provision section 91 provides registration data 83 in which component specification information 75 and equipment information 76 are added to shape data 74. As shown in Fig. 3, registration data 83 is configured by adding component specification information 75, equipment information 76, and reliability information 77 to shape data 74, and further applying data name 79 to shape data 74. Shape data 74 is limited to data that has a record used for the component mounting work and is permitted to be disclosed by the data provider.

Component specification information 75 is information for specifying the type of the components, and needs to be understood by a person other than the data provider. Accordingly, the in-house designation or the like independently set by the data provider does not correspond to component specification information 75. Examples of component specification information 75 include the name of the manufacturer of the components, the model applied by the manufacturer, and the designation in the standard. Further, the image data acquired by imaging the external shapes of the components may be used as component specification information 75.

Equipment information 76 is information on component mounter 1 which has performed the mounting work. Equipment information 76 is, for example, information on a name of the manufacturer, a model, a specification, a capability, and the like of the component mounter 1 as well as information on a name, a model, a specification, a capability, and the like of a device constituting component mounter 1. The device constituting component mounter 1 includes feeder 3 serving as a component supplying device, suction nozzle 46 serving as a component mounting tool, mounting head 45, camera device 5, and the like.

In addition, data provision section 91 targets only shape data 74 of components having a usage record of a regulated number or more. For example, data provision section 91 provides only shape data 74 used in the mounting work of 1000 or more components. With the above, shape data 74 for which the usage record is small and the reliability is not sufficient is not provided. Similarly, shape data 74 that incorporates a problem and is corrected or deactivated in a short period of time is not provided. Accordingly, the quality of provided shape data 74 is improved.

In addition, data provision section 91 adds reliability information 77 on the work reliability when the mounting work is performed to shape data 74 to create registration data 83. Reliability information 77 includes information indicating at least one of the pickup success rate and the mounting success rate. The pickup success rate indicates a probability that suction nozzle 46 has properly performed the suction operation. The mounting success rate indicates a probability that suction nozzle 46 has succeeded in the mounting operation. The data of the number of operations and the number of successes based on the pickup success rate and the mounting success rate may or may not be included in reliability information 77.

Data provision section 91 does not provide registration data 83 in which reliability information 77 does not satisfy a predetermined registration criterion. As the registration criterion, the mounting success rate of 99% can be exemplified. That is, data provision section 91 does not provide registration data 83 having the mounting success rate of less than 99%. With the above, excellent shape data 74 capable of improving the reliability of the mounting work can be selectively provided.

In addition, data provision section 91 provides registration data 83 in a case where reliability information 77 of a current mounting work is improved as compared with the previous mounting work. For example, mounting success rate A of the previous mounting work and mounting success rate B of the current mounting work of a certain type of components are assumed. In a case where A < B, data provision section 91 provides registration data 83 in which shape data 74 used this time and reliability information 77 of a mounting success rate B are associated with each other. In addition, data provision section 91 does not provide registration data 83 in a case where A ≥ B. With the above, since the progress of the improvement of shape data 74 is disclosed and the most excellent shape data 74 can be provided at present, which is preferable for the data user.

In addition, data provision section 91 deletes, out of information included in shape data 74, information that is not related to the shape and that the data provider does not want to disclose from registration data 83. The information that is not wanted to be disclosed is applied to shape data 74 for the purpose of convenience in the enterprise of the data provider or the like. Examples of information that is not wanted to be disclosed include business information and information on know-how of the data provider.

For example, it is preferable that the product name or the name of the production requester of the board product to which the components are mounted is not marketably disclosed. In addition, information on the management of the components, specifically, information on a procurement route of the components, the in-house storage criterion, and the like, is information on the know-how of the data provider, and is preferably not disclosed. Even if such information not related to the shape of the component is not disclosed, the data user can utilize the portion related to the shape of shape data 74.

Data name itself of shape data 74 may include information that is not wanted to be disclosed. For example, the data name of shape data 74 may include the model of the board product, an abbreviation of the product name, or the like. In this case, data provision section 91 applies data name 79 of registration data 83 different from the data name of shape data 74. As a result, the disclosure of the data name of shape data 74 is avoided.

In a case where the data name of shape data 74 may be disclosed, data provision section 91 may set the data name of shape data 74 as it is as data name 79 of registration data 83. In addition, data provision section 91 may newly apply easy-to-understand data name 79 regardless of whether the disclosure is permitted. As easy-to-understand data name 79, for example, the abbreviation of the type of component and the serial number are combined to use data name 79 of "CN***" for a connector component and data name 79 of "R****" for a resistor component (*** is a three-digit serial number).

Data management section 92 manages registration data 83 provided from data provision section 91 on database 82. Specifically, data management section 92 basically accumulates registration data 83 provided from any of data provision sections 91 of multiple management computers 7 in database 82. Here, registration data 83 provided from the multiple data providers may not coincide completely with modes of component specification information 75 and equipment information 76. Accordingly, data management section 92 compares multiple pieces of registration data 83, matches the modes of component specification information 75 and equipment information 76, and performs unified management.

For example, it is assumed that the first data provider uses component specification information 75 consisting of the name of the manufacturer and the model of the components, and the second data provider uses component specification information 75 including the name of the manufacturer, an electrical characteristic value, and a nominal dimension of the components. **In** this case, data management section 92 compares component specification information 75 of both with each other to determine whether they are actually the same, that is, determines whether the types of components are different from each other. **In a** case where they are actually the same, data management section 92 collectively uses component specification information 75 consisting of the name of the manufacturer, the model, the electrical characteristic value, and the nominal dimension of the components including both.

In addition, since the storage capacity of database 82 is limited, data management section 92 deletes excessive registration data 83 with low reliability. Specifically, data management section 92 accumulates up to the predetermined number of registration data 83 in descending order of reliability information 77 with respect to registration data 83 in which component specification information 75 is the same. Then, when registration data 83 in which component specification information 75 is the same is provided in an amount exceeding the predetermined number, data management section 92 deletes registration data 83 in which reliability information 77 is low by an amount exceeding the regulated number from database 82.

That is, since it is not meaningful to accumulate multiple pieces of registration data 83 for one type of component excessively, data management section 92 accumulates the regulated number of pieces of registration data 83 that are reliable and exemplary. As a result, storage capacity of database 82 is saved, and excellent shape data 74 is selectively accumulated.

When registration data 83 in which component specification information 75 and equipment information 76 are the same is provided in the amount exceeding the predetermined number, data management section 92 may delete registration data 83 exceeding the predetermined number from database 82 based on reliability information 77. From another viewpoint, in another type of component mounter 1 in which equipment information 76 is different, the capability itself of the mounting work is different. Therefore, the data provider and the data user may consider shape data 74 separately for each model of component mounter 1.

Data search section 93 searches registration data 83 on database using a search condition including at least a part of shape data 74, component specification information 75, and equipment information 76, and set by the data user. By using management computer 7, an operator of an enterprise or a factory as a data user can set a search condition corresponding to a shape of new components, a search condition specifying the new components, and a search condition corresponding to component mounter 1. In addition, the operator can set a logical AND or a logical sum of multiple search conditions. Data search section 93 executes search processing on database 82 via communication, and extracts registration data 83 compatible with the search condition.

Data sharing section 94 supplies registration data 83 extracted by the search by data search section 93 so as to be usable to the data user. Extracted registration data 83 is downloaded from cloud server 8 to management computer 7. The data user easily edits shape data 74 in downloaded registration data 83 to be shape data 74 of the user. Alternatively, the data user may use downloaded shape data 74 as shape data 74 of the user as it is.

As an example of editing shape data 74, there is a case where a notation method of an allowable error of the component size is expressed as an absolute value by the data provider and as a percentage by the data user. **In** this case, the data user performs editing to convert the allowable error expressed as the absolute value into the allowable error expressed as the percentage, and sets the edited data as shape data 74 of the user. For example, in a case where the brightness of the appearance color of the components is displayed in 256 stages or displayed in 1024 stages and is not unified, editing of shape data 74 is required. **In** addition, changing the data name of shape data 74 also corresponds to the editing. Data sharing section 94 shares shape data 74 between the data provider and the data user. Each function of the four functional sections will be described in the following operation flow.

### 4. Operation of shape data sharing system 9 of embodiment

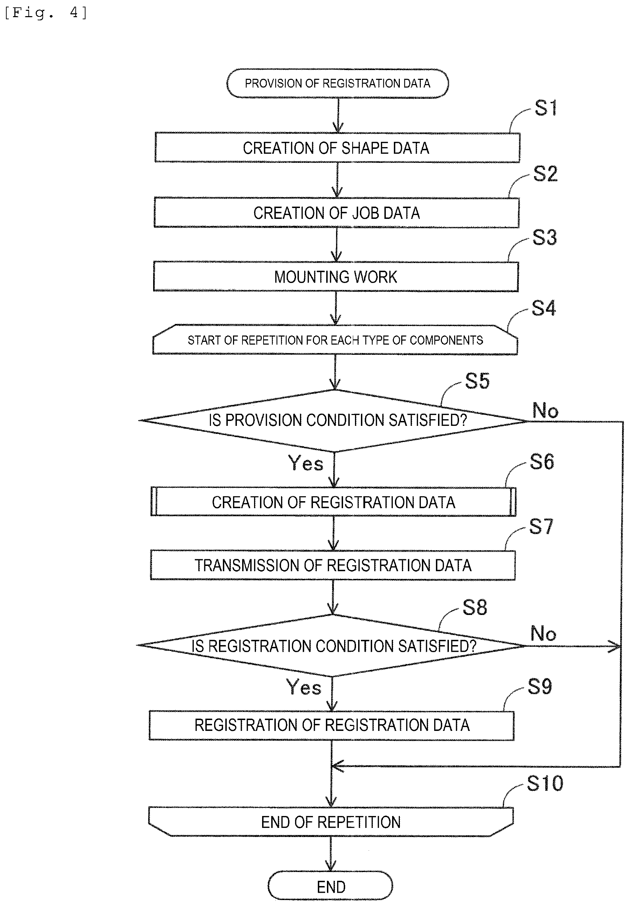

Next, the operation of shape data sharing system 9 will be described. Among the operation flows related to the provision of the registration data shown in Fig. 4, step S1 to step S3 are steps related to the normal operation of component mounter 1, and involve an operation of an operator. Step S4 and subsequent steps relate to the operation of shape data sharing system 9.

**In** step S1, the operator first acquires information on a board product to be produced, and investigates the presence or absence of new components. **In a** case where there are no new components, the execution of the operation flow is skipped to step S2. **In** a case where there are new components, the operator creates shape data 74 and component data 73 of the components. As the creation method, either the conventional art method described above or the method of the embodiment described later may be applied.

**In** the next step S2, the operator creates job data 72 of the board product to be produced. **In** a case where there is a production record of the board product, job data 72 has already been created. **In** this case, the operator needs only correct job data 72 as required. By the end of the step S2, preparation for the mounting work is completed. In the next step S3, component mounter 1 repeatedly performs the mounting work to produce multiple board products.

When the mounting work is ended multiple times, shape data sharing system 9 is activated. That is, data provision section 91 of shape data sharing system 9 operates each point in time when the repetition of the mounting work using shape data 74 has ended. With the above, latest reliability information 77 is acquired when the mounting work is delimited, and it is determined whether a provision condition is satisfied. The present invention is not limited to this, and data provision section 91 may operate each point in time when the number of uses of shape data 74 is increased by a predetermined number of times. Alternatively, data provision section 91 may operate each point in time when a predetermined period elapses.

Shape data sharing system 9 repeats step S4 to step S10 for each type of mounted components. Specifically, in step S5, data provision section 91 determines whether the first type of components satisfies the provision condition. The provision conditions are the three conditions described above, and are relisted below.
1) A condition for usage record of predetermined number or more
2) A condition that reliability information 77 satisfies a predetermined registration criterion
3) A condition that reliability information 77 of the current mounting work is improved

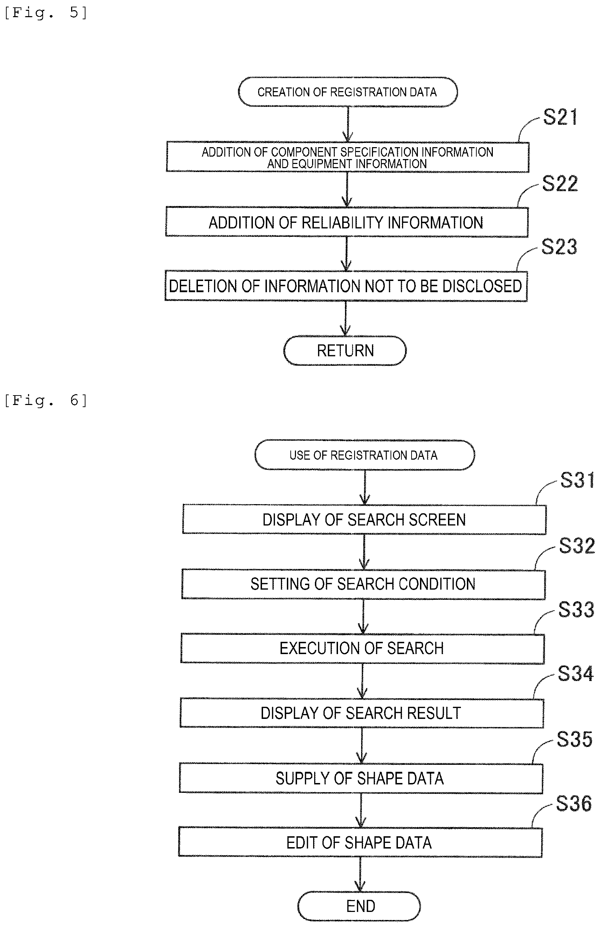

In step S6 in a case where the provision condition is satisfied, data provision section 91 creates registration data 83. The details of step S6 are shown in the detailed flow in Fig. 5. In step S21 in Fig. 5, data provision section 91 adds component specification information 75 and equipment information 76 to shape data 74. In the next step S22, data provision section 91 adds reliability information 77 to shape data 74. In the next step S23, data provision section 91 deletes the information that is not wanted to be disclosed, applies data name 79, and completes registration data 83. Thereafter, the execution of the operation flow proceeds to step S7 in Fig. 4. In step S7, data provision section 91 transmits registration data 83 to data management section 92 via the communication.

In the next step S8, data management section 92 determines whether provided registration data 83 satisfies the registration condition. The registration condition does not correspond to excessive registration data 83 described above. In step S9 in a case where the registration condition is satisfied, data management section 92 registers registration data 83 in database 82.

After the end of step S9, when the registration condition is not satisfied in step S8, and when the provision condition is not satisfied in step S5, the operation on the first type of components is ended. Thereafter, the execution of the operation flow is returned to step S5. In the second step S5, data provision section 91 operates on the second type of components. Thereafter, the same operation as in the case of the first type of components is repeated.

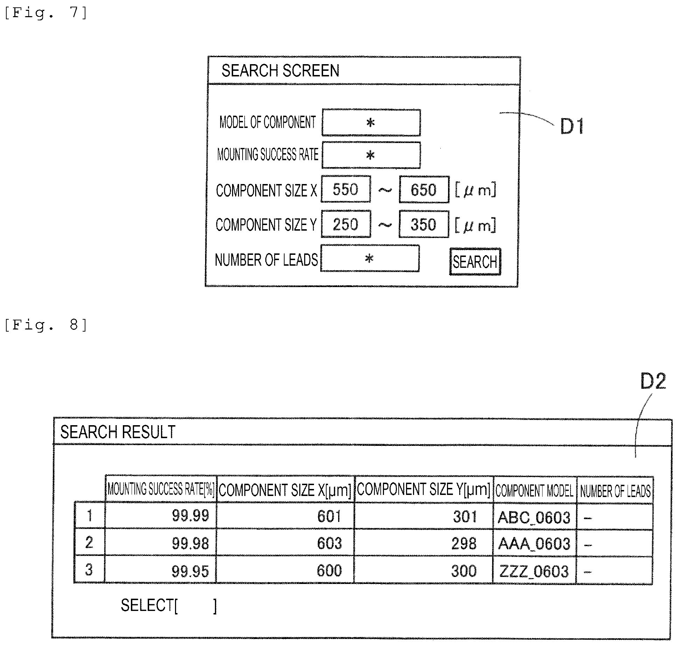

Next, the operation flow related to the use of the registration data shown in Fig. 6 is executed prior to the use when new components are used in an enterprise or a factory as a data user. This operation flow involves setting by an input operation of the operator. In step S31, data search section 93 displays search screen D1 on a display device of management computer 7. In search screen D1 shown in Fig. 7, five search item columns for setting the search condition are provided. The specific search item columns are a column of the model of components, a column of the mounting success rate, a column of the minimum value and the maximum value of a longitudinal direction size X of the components, a column of the minimum value and the maximum value of a lateral direction size Y of the components, and a column of the number of leads of the components.

In the next step S32, the operator sets the search condition in each search item column. In the example shown in Fig. 7, the operator pays attention to the fact that nominal values of the longitudinal direction size X and the lateral direction size Y of the new components are 600 µm and 300 µm, and performs the setting in consideration of the margin of 50 µm. As a result, the minimum value 550 µm and the maximum value 650 µm of the longitudinal direction size X, the minimum value 250 µm and the maximum value 350 µm of the lateral direction size Y are set. In addition, the operator sets a wildcard "*" in the other search item columns. The wildcard "*" means that there is no constraint on the search condition in the search item column. The search item column in which the setting is omitted is regarded as a wildcard "*" being set.

After ending the setting, the operator clicks the "search" switch at the lower right of search screen D1. As a result, in the next step S33, data search section 93 searches for registration data 83 on database 82 using the set search condition. In the next step S34, data search section 93 displays screen D2 of the search result on the display device of management computer 7. In screen D2 shown in Fig. 8, contents of a part of three pieces of registration data 83 extracted by the search are displayed.

That is, the number of extracted registration data 83, the mounting success rate (reliability information 77), the longitudinal direction size X and the lateral direction size Y (shape data 74), the model of the components (component specification information 75), and the number of leads (shape data 74) are displayed in order from the left side to the right side of screen D2. In addition, from the upper side to the lower side of screen D2, three pieces of registration data 83 numbered 1 to 3 are displayed side by side in descending order of the mounting success rate.

For example, the mounting success rate of registration data 83 of the number 1 is 99.99%, longitudinal direction size X is 601 µm, lateral direction size Y is 301 µm, the model of components is "ABC_0603", and the number of leads is "-". The "-" in the number of leads indicates a chip component having no leads.

After confirming screen D2, the operator sets any of the numbers 1 to 3 in a setting column of "select" at the lower portion of screen D2. As a result, in the next step S35, data sharing section 94 downloads registration data 83 of the set number to management computer 7, and supplies it to the data user. Data sharing section 94 may supply all of extracted three pieces of registration data 83 to the data user. Supplied registration data 83 includes the content of detailed shape data 74 that is not displayed on screen D2.

In the next step S36, the data user easily edits shape data 74 in supplied registration data 83 to be shape data 74 of the user. Alternatively, the data user sets shape data 74 as shape data 74 of the user as it is. The operation flow in Fig. 6 shows a creation method of shape data 74 according to the embodiment, and is applied to step S1 in Fig. 4.

In shape data sharing system 9 according to the embodiment, registration data 83 in which component specification information 75 and equipment information 76 on component mounter 1 are added to shape data 74 owned by the data provider and having the usage record is provided and managed on database 82. Then, registration data 83 extracted from database 82 by the search is supplied to the data user, so that shape data 74 is shared. Accordingly, highly reliable shape data 74 having the usage record is shared.

As a result, the efforts for the creation, verification, and correction of shape data 74 on the data user side are simplified, so that labor saving is achieved. In addition, since the quality of shape data 74 is improved, it is possible to reduce the problems such as the discard rate of components and the interruption of production. In addition, a mutually beneficial relationship is established by multiple enterprises and factories playing the roles of the data provider and the data user with each other. Accordingly, shape data sharing system 9 can contribute to the development of the industry as a whole for producing the board product.

### 5. Other applications and variations of embodiment

Shape data sharing system 9 of the embodiment performs the shape data sharing method of the embodiment. In addition, in the operation flow shown in Fig. 4, the creation, transmission, and registration of registration data 83 are performed in order for each type of components, but the transmission and registration may be performed collectively after registration data 83 of multiple types of components is created. In addition, data provision section 91 does not provide registration data 83 in which reliability information 77 does not satisfy a predetermined registration criterion, but there may be another method. Alternatively, data provision section 91 transmits registration data 83 regardless of whether the registration criterion is satisfied, and data management section 92 does not accept the provision of registration data 83 that does not satisfy the registration criterion.

In addition, search screen D1 in Fig. 7 is an example, and the search may be performed using a search item different from search screen D1, for example, a search item related to equipment information 76, the image data of components as component specification information 75, or the like. Further, as a method of setting the search condition, it is possible to adopt a method in which data search section 93 displays multiple options of the search condition and the operator selects and sets any one of the options. Furthermore, screen D2 as a search result in Fig. 8 is an example, and the display item may be changed or the display mode may be changed.

In addition, three types of restriction conditions are not indispensable; that there is a usage record of a predetermined number or more, that reliability information 77 satisfies the registration criterion, and that registration data 83 in which component specification information 75 is the same is less than or equal to a predetermined number. That is, some or all of the restriction conditions need not be set. In addition, in closed shape data sharing system 9 in which the data provider and the data user belong to the same enterprise or the same enterprise group, step S23 may be omitted. In addition, the embodiments can be applied or modified in various manners.

### Reference Signs List

1: component mounter, 2: board conveyance device, 3: feeder, 4: component transfer device, 45: mounting head, 46: suction nozzle, 5: camera device, 6: control device, 7: management computer, 72: job data, 73: component data, 74: shape data, 75: component specification information, 76: equipment information, 77: reliability information, 79: data name, 8: cloud server, 81: cloud control section, 82: database, 83: registration data, 91: data provision section, 92: data management section, 93: data search section, 94: data sharing section

## Claims

1. A shape data sharing system comprising:
a data provision section (91) configured to provide registration data (83), wherein the data provision section (91) is configured to add component specification information (75) for specifying a component (4) and equipment information (76) on a component mounter (1) which has performed a mounting work, such as information on a name of the manufacturer, a model, a specification or a capability of the component mounter, to shape data owned by a data provider to create the registration data (83), the shape data including information related to a shape of the component (4) and having a usage record indicating how many times the shape data was used in the mounting work of the component (4), wherein the component specification information (75) is information for specifying the type of the component such as a name of the manufacturer of the component, a model applied by the manufacturer, and a designation in standard;
a data management section (92) configured to manage the registration data (83) provided by the data provision section (91) on a database (82);
a data search section (93) configured to search for the registration data (83) on the database (82) by using a search condition set by a data user, the search condition including at least a part of the shape data, the component specification information (75), and the equipment information (76); and
a data sharing section (94) configured to supply the registration data (83) extracted by the search of the data search section (93) to the data user so as to be usable by the data user and share the shape data between the data provider and the data user,
wherein the data provision section (91) is configured to delete, out of information included in the shape data, information that is not related to the shape from the registration data (83) and that the data provider does not want to disclose from the registration data (83),
the data provision section (91) adds reliability information (77) on a work reliability when the mounting work is performed to the shape data to create the registration data (83), the reliability information (77) includes information indicating at least one of a pickup success rate indicating a probability that a component mounting tool can properly pick up the component from a component supply device and a mounting success rate indicating a probability that the component mounting tool has succeeded in the mounting work, and
the data provision section (91) does not provide the registration data (83) in which the reliability information (77) does not satisfy a predetermined registration criterion, or the data management section (92) does not accept the provision of the registration data in which the reliability information does not satisfy the predetermined registration criterion;
wherein the data management section is configured to accumulate up to a predetermined number of registration data in descending order of reliability information, and
when:
• the registration data (83) having the same component specification information, or
• the registration data (83) having the same component specification information and the same equipment information,
is provided in an amount exceeding the predetermined number,
the data management section (92) is configured to delete the registration data (83) exceeding the predetermined number from the database (82) in which the reliability information is low.

2. The shape data sharing system according to claim 1, wherein
the data provision section (91) is configured to provide only the shape data of the component having the usage record of a predetermined number or more.

3. The shape data sharing system according to claim 1 or 2, wherein
the data provision section (91) is configured to provide the registration data added with the reliability information (77) of a current mounting work when the reliability information of the current mounting work is improved as compared with the reliability information of a previous mounting work, and does not provide the registration data (83) when the reliability information is not improved.

4. The shape data sharing system according to any one of claims 1 to 3, wherein
the data provision section (91) is configured to operate in at least one of each point in time when a repetition of the mounting work using the shape data has ended, each point in time when the number of times of use of the shape data is increased by a predetermined number of times, and each point in time when a predetermined period has elapsed.

5. The shape data sharing system according to any one of claims 1 to 4, wherein
the component specification information includes information representing at least one of a model and a manufacturer of the component (4).

6. The shape data sharing system according to any one of claims 1 to 5, wherein
the equipment information (76) includes information representing at least one of a component supply device for supplying the component, a component mounting tool for picking up and holding the component from the component supply device in the mounting work, a mounting head (45) for holding and moving the component mounting tool, and a camera device (5) for imaging the component held by the component mounting tool.

7. The shape data sharing system according to any one of claims 1 to 6, wherein
the database (82) is provided in a cloud server (8) accessible to the data provider and the data user.

8. A shape data sharing method, comprising:
a data provision step of providing registration data (83) in which component specification information (75) for specifying a component (4) and equipment information (76) on a component mounter which has performed a mounting work, such as information on a name of the manufacturer, a model, a specification or a capability of the component mounter, are added (S21) to shape data owned by a data provider to create the registration data (83), the shape data including information related to a shape of the component and having a usage record indicating how many times the shape data was used in the mounting work of the component, wherein the component specification information (75) is information for specifying the type of the component such as a name of the manufacturer of the component, a model applied by the manufacturer, and a designation in standard;
a data management step of managing the registration data (83) provided in the data provision step on a database (82);
a data search step of searching for the registration data on the database (82) by using a search condition set by a data user, the search condition including at least a part of the shape data, the component specification information (75), and the equipment information (76); and
a data sharing step of supplying the registration data (83) extracted by the search in the data search step to the data user so as to be usable by the user and sharing the shape data between the data provider and the data user,
wherein the data provision step includes deleting (S23), out of information included in the shape data, information that is not related to the shape from the registration data and that the data provider does not want to disclose from the registration data,
the data provision step includes adding (S22) reliability information on a work reliability when the mounting work is performed to the shape data to create the registration data,
the reliability information (77) includes information indicating at least one of a pickup success rate indicating a probability that a component mounting tool can properly pick up the component from a component supply device and a mounting success rate indicating a probability that the component mounting tool has succeeded in the mounting work,
in the data provision step the registration data (83) in which the reliability information (77) does not satisfy a predetermined registration criterion is not provided, or in the data management step, the provision of the registration data (83) in which the reliability information (77) does not satisfy the predetermined registration criterion is not accepted;
wherein the data management step includes accumulating up to a predetermined number of registration data in descending order of reliability information, and
when:
• the registration data (83) having the same component specification information, or
• the registration data (83) having the same component specification information and
the same equipment information,
is provided in an amount exceeding the predetermined number,
the data management step includes deleting the registration data (83) exceeding the predetermined number from the database (82) in which the reliability information is low.

## Patentansprüche

1. System zum Teilen von Formdaten, das Folgendes umfasst:
einen Datenbereitstellungsabschnitt (91), der dazu konfiguriert ist, Registrierungsdaten (83) bereitzustellen, wobei der Datenbereitstellungsabschnitt (91) dazu konfiguriert ist, Komponentenspezifikationsinformationen (75) zum Spezifizieren einer Komponente (4) und Ausrüstungsinformationen (76) über eine Komponentenmontageeinrichtung (1), die eine Montagearbeit durchgeführt hat, wie beispielsweise Informationen über einen Namen des Herstellers, ein Modell, eine Spezifikation oder eine Fähigkeit der Komponentenmontageeinrichtung, zu Formdaten hinzuzufügen, die einem Datenanbieter gehören, um die Registrierungsdaten (83) zu erstellen, wobei die Formdaten Informationen beinhalten, die sich auf eine Form der Komponente (4) beziehen, und einen Verwendungsdatensatz aufweisen, der angibt, wie oft die Formdaten bei der Montagearbeit der Komponente (4) verwendet wurden, wobei die Komponentenspezifikationsinformationen (75) Informationen zum Spezifizieren des Typs der Komponente sind, wie ein Name des Herstellers der Komponente, ein von dem Hersteller verwendetes Modell und eine Bezeichnung in der Norm;
einen Datenverwaltungsabschnitt (92), der dazu konfiguriert ist, die von dem Datenbereitstellungsabschnitt (91) bereitgestellten Registrierungsdaten (83) in einer Datenbank (82) zu verwalten;
einen Datensuchabschnitt (93), der dazu konfiguriert ist, in der Datenbank (82) unter Verwendung einer von einem Datenbenutzer eingestellten Suchbedingung nach den Registrierungsdaten (83) zu suchen, wobei die Suchbedingung mindestens einen Teil der Formdaten, die Komponentenspezifikationsinformationen (75) und die Ausrüstungsinformationen (76) beinhaltet; und
einen Abschnitt (94) zum Teilen von Daten, der dazu konfiguriert ist, die Registrierungsdaten (83), die durch die Suche des Datensuchabschnitts (93) extrahiert wurden, an den Datenbenutzer zu liefern, so dass sie von dem Datenbenutzer verwendet werden können, und die Formdaten zwischen dem Datenanbieter und dem Datenbenutzer zu teilen, wobei der Datenbereitstellungsabschnitt (91) dazu konfiguriert ist, aus den Informationen, die in den Formdaten enthalten sind, Informationen zu löschen, die sich nicht auf die Form aus den Registrierungsdaten (83) beziehen und die der Datenanbieter nicht aus den Registrierungsdaten (83) offenlegen möchte,
der Datenbereitstellungsabschnitt (91) Zuverlässigkeitsinformationen (77) über eine Arbeitszuverlässigkeit hinzufügt, wenn die Montagearbeit an den Formdaten durchgeführt wird, um die Registrierungsdaten (83) zu erstellen,
die Zuverlässigkeitsinformationen (77) Informationen beinhalten, die mindestens eine von einer Aufnahmeerfolgsrate, die eine Wahrscheinlichkeit angibt, dass ein Komponentenmontagewerkzeug die Komponente ordnungsgemäß von einer Komponentenzuführvorrichtung aufnehmen kann, und einer Montageerfolgsrate, die eine Wahrscheinlichkeit angibt, dass das Komponentenmontagewerkzeug die Montagearbeit erfolgreich durchgeführt hat, angeben, und
der Datenbereitstellungsabschnitt (91) die Registrierungsdaten (83) nicht bereitstellt, bei welchen die Zuverlässigkeitsinformationen (77) ein vorgegebenes Registrierungskriterium nicht erfüllen, oder der Datenverwaltungsabschnitt (92) die Bereitstellung der Registrierungsdaten nicht akzeptiert, bei welchen die Zuverlässigkeitsinformationen das vorgegebene Registrierungskriterium nicht erfüllen;
wobei der Datenverwaltungsabschnitt dazu konfiguriert ist, bis zu einer vorgegebenen Anzahl von Registrierungsdaten in absteigender Reihenfolge der Zuverlässigkeitsinformationen zu akkumulieren, und
wenn:
• die Registrierungsdaten (83), die dieselben Komponentenspezifikationsinformationen enthalten, oder
• die Registrierungsdaten (83), die dieselben Komponentenspezifikationsinformationen und dieselben Ausrüstungsinformationen aufweisen,
in einer Menge bereitgestellt werden, die die vorgegebene Anzahl übersteigt,
der Datenverwaltungsabschnitt (92) dazu konfiguriert ist, die Registrierungsdaten (83), die die vorgegebene Anzahl überschreiten, aus der Datenbank (82) zu löschen, in der die Zuverlässigkeitsinformationen niedrig sind.

2. System zum Teilen von Formdaten nach Anspruch 1, wobei
der Datenbereitstellungsabschnitt (91) dazu konfiguriert ist, nur die Formdaten der Komponente bereitzustellen, die den Nutzungsdatensatz einer vorgegebenen Anzahl oder mehr aufweist.

3. System zum Teilen von Formdaten nach Anspruch 1 oder 2, wobei
der Datenbereitstellungsabschnitt (91) dazu konfiguriert ist, die Registrierungsdaten, welchen die Zuverlässigkeitsinformationen (77) einer aktuellen Montagearbeit hinzugefügt wurden, bereitzustellen, wenn die Zuverlässigkeitsinformationen der aktuellen Montagearbeit im Vergleich zu den Zuverlässigkeitsinformationen einer vorherigen Montagearbeit verbessert sind, und die Registrierungsdaten (83) nicht bereitstellt, wenn die Zuverlässigkeitsinformationen nicht verbessert sind.

4. System zum Teilen von Formdaten nach einem der Ansprüche 1 bis 3, wobei
der Datenbereitstellungsabschnitt (91) dazu konfiguriert ist, zu mindestens einem von jedem Zeitpunkt, wenn eine Wiederholung der Montagearbeit unter Verwendung der Formdaten beendet ist, jedem Zeitpunkt, wenn die Anzahl von Malen der Verwendung der Formdaten um eine vorgegebene Anzahl von Malen erhöht ist, und jedem Zeitpunkt, wenn eine vorgegebene Periode verstrichen ist, zu arbeiten.

5. System zum Teilen von Formdaten nach einem der Ansprüche 1 bis 4, wobei
die Komponentenspezifikationsinformationen Informationen beinhalten, die mindestens eines von einem Modell und einem Hersteller der Komponente (4) repräsentieren.

6. System zum Teilen von Formdaten nach einem der Ansprüche 1 bis 5, wobei
die Ausrüstungsinformationen (76) Informationen beinhalten, die mindestens eines von einer Komponentenzuführvorrichtung zum Zuführen der Komponente, einem Komponentenmontagewerkzeug zum Aufnehmen und Halten der Komponente von der Komponentenzuführvorrichtung in der Montagearbeit, einen Montagekopf (45) zum Halten und Bewegen des Komponentenmontagewerkzeugs, und eine Kameravorrichtung (5) zum Abbilden der von dem Komponentenmontagewerkzeug gehaltenen Komponente repräsentieren.

7. System zum Teilen von Formdaten nach einem der Ansprüche 1 bis 6, wobei
die Datenbank (82) in einem Cloud-Server (8) bereitgestellt ist, der für den Datenanbieter und den Datennutzer zugänglich ist.

8. Verfahren zum Teilen von Formdaten, das Folgendes umfasst:
einen Datenbereitstellungschritt zum Bereitstellen von Registrierungsdaten (83), in dem Komponentenspezifikationsinformationen (75) zum Spezifizieren einer Komponente (4) und Ausrüstungsinformationen (76) über eine Komponentenmontageeinrichtung (1), die eine Montagearbeit durchgeführt hat, wie beispielsweise Informationen über einen Namen des Herstellers, ein Modell, eine Spezifikation oder eine Fähigkeit der Komponentenmontageeinrichtung, zu Formdaten hinzugefügt werden (S21), die einem Datenanbieter gehören, um die Registrierungsdaten (83) zu erstellen, wobei die Formdaten Informationen beinhalten, die sich auf eine Form der Komponente beziehen, und einen Verwendungsdatensatz aufweisen, der angibt, wie oft die Formdaten bei der Montagearbeit der Komponente verwendet wurden, wobei die Komponentenspezifikationsinformationen (75) Informationen zum Spezifizieren des Typs der Komponente sind, wie ein Name des Herstellers der Komponente, ein von dem Hersteller verwendetes Modell und eine Bezeichnung in der Norm;
einen Datenverwaltungsschritt zum Verwalten der in dem Datenbereitstellungsschritt bereitgestellten Registrierungsdaten (83) in einer Datenbank (82);
einen Datensuchschritt (93) zum Suchen nach den Registrierungsdaten in der Datenbank (82) unter Verwendung einer von einem Datenbenutzer eingestellten Suchbedingung, wobei die Suchbedingung mindestens einen Teil der Formdaten, die Komponentenspezifikationsinformationen (75) und die Ausrüstungsinformationen (76) beinhaltet; und
einen Datenteilschritt zum Liefern der Registrierungsdaten (83), die in dem Datensuchschritt extrahiert wurden, an den Datenbenutzer, so dass sie von dem Datenbenutzer verwendet werden können, und zum Teilen der Formdaten zwischen dem Datenanbieter und dem Datenbenutzer,
wobei der Datenbereitstellungsschritt das Löschen (S23), aus den Informationen, die in den Formdaten enthalten sind, von Informationen beinhaltet, die sich nicht auf die Form aus den Registrierungsdaten beziehen und die der Datenanbieter nicht aus den Registrierungsdaten offenlegen möchte,
der Datenbereitstellungsschritt das Hinzufügen (S22) von Zuverlässigkeitsinformationen über eine Arbeitszuverlässigkeit beinhaltet, wenn die Montagearbeit an den Formdaten durchgeführt wird, um die Registrierungsdaten zu erstellen,
die Zuverlässigkeitsinformationen (77) Informationen beinhalten, die mindestens eine von einer Aufnahmeerfolgsrate, die eine Wahrscheinlichkeit angibt, dass ein Komponentenmontagewerkzeug die Komponente ordnungsgemäß von einer Komponentenzuführvorrichtung aufnehmen kann, und einer Montageerfolgsrate, die eine Wahrscheinlichkeit angibt, dass das Komponentenmontagewerkzeug die Montagearbeit erfolgreich durchgeführt hat, angeben,
in dem Datenbereitstellungsschritt die Registrierungsdaten (83), bei welchen die Zuverlässigkeitsinformationen (77) ein vorgegebenes Registrierungskriterium nicht erfüllen,
nicht bereitgestellt werden, oder in dem Datenverwaltungsschritt die Bereitstellung der Registrierungsdaten (83), bei welchen die Zuverlässigkeitsinformationen (77) das vorgegebene Registrierungskriterium nicht erfüllen, nicht akzeptiert wird;
wobei der Datenverwaltungsschritt das Akkumulieren von bis zu einer vorgegebenen Anzahl von Registrierungsdaten in absteigender Reihenfolge der Zuverlässigkeitsinformationen beinhaltet, und
wenn:
• die Registrierungsdaten (83), die dieselben Komponentenspezifikationsinformationen enthalten, oder
• die Registrierungsdaten (83), die dieselben Komponentenspezifikationsinformationen und dieselben Ausrüstungsinformationen aufweisen,
in einer Menge bereitgestellt werden, die die vorgegebene Anzahl übersteigt,
der Datenverwaltungsschritt das Löschen der Registrierungsdaten (83), die die vorgegebene Anzahl überschreiten, aus der Datenbank (82) beinhaltet, in der die Zuverlässigkeitsinformationen niedrig sind.

## Revendications

1. Système de partage de données de forme comprenant :
une section de fourniture de données (91) configurée pour fournir des données d'enregistrement (83), dans lequel la section de fourniture de données (91) est configurée pour ajouter des informations de spécification de composant (75) pour spécifier un composant (4) et des informations d'équipement (76) sur un monteur de composants (1) qui a exécuté une tâche de montage, telles que des informations sur un nom du fabricant, un modèle, une spécification ou une capacité du monteur de composants, à des données de forme détenues par un fournisseur de données pour créer les données d'enregistrement (83), les données de forme incluant des informations liées à une forme du composant (4) et présentant un enregistrement d'usage indiquant le nombre de fois que les données de forme ont été utilisées dans la tâche de montage du composant (4), dans lequel les informations de spécification de composant (75) sont des informations pour spécifier le type du composant, telles qu'un nom du fabricant du composant, un modèle appliqué par le fabricant et une désignation dans le cadre d'une norme ;
une section de gestion de données (92) configurée pour gérer les données d'enregistrement (83) fournies par la section de fourniture de données (91) dans une base de données (82) ;
une section de recherche de données (93) configurée pour rechercher les données d'enregistrement (83) dans la base de données (82) en utilisant une condition de recherche définie par un utilisateur de données, la condition de recherche incluant au moins une partie des données de forme, les informations de spécification de composant (75), et les informations d'équipement (76) ; et
une section de partage de données (94) configurée pour fournir les données d'enregistrement (83) extraites par la recherche de la section de recherche de données (93) à l'utilisateur de données de sorte à être exploitables par l'utilisateur de données, et partager les données de forme entre le fournisseur de données et l'utilisateur de données,
dans lequel la section de fourniture de données (91) est configuré pour supprimer, parmi des informations incluses dans les données de forme, des informations qui ne sont pas associées à la forme issues des données d'enregistrement (83) et que le fournisseur de données ne veut pas divulguer hors des données d'enregistrement (83),
la section de fourniture de données (91) ajoute des informations de fiabilité (77) sur une fiabilité de tâche lorsque la tâche de montage est exécutée aux données de forme pour créer les données d'enregistrement (83),
les informations de fiabilité (77) incluent des informations indiquant au moins un d'un taux de réussite de prélèvement indiquant une probabilité qu'un outil de montage de composant puisse correctement prélever le composant auprès d'un dispositif de fourniture de composants et d'un taux de réussite de montage indiquant une probabilité que l'outil de montage de composant ait réussi dans la tâche de montage, et
la section de fourniture de données (91) ne fournit pas les données d'enregistrement (83) dans lesquelles les informations de fiabilité (77) ne satisfont pas un critère d'enregistrement prédéterminé, ou la section de gestion de données (92) n'accepte pas la fourniture des données d'enregistrement dans lesquelles les informations de fiabilité ne satisfont pas le critère d'enregistrement prédéterminé ;
dans lequel la section de gestion de données est configurée pour accumuler jusqu'à un nombre prédéterminé de données d'enregistrement en ordre décroissant d'informations de fiabilité, et
quand :
o les données d'enregistrement (83) présentant les mêmes informations de spécification de composant, ou
o les données d'enregistrement (83) présentant les mêmes informations de spécification de composant et les mêmes informations d'équipement,
sont fournies dans une quantité dépassant le nombre prédéterminé,
la section de gestion de données (92) est configurée pour supprimer les données d'enregistrement (83) dépassant le nombre prédéterminé dans la base de données (82) dans laquelle les informations de fiabilité sont faibles.

2. Le système de partage de données de forme selon la revendication 1, dans lequel
la section de fourniture de données (91) est configurée pour fournir uniquement les données de forme du composant présentant l'enregistrement d'usage d'un nombre prédéterminé ou supérieur.

3. Le système de partage de données de forme selon la revendication 1 ou 2, dans lequel
la section de fourniture de données (91) est configurée pour fournir les données d'enregistrement ajoutées aux informations de fiabilité (77) d'une tâche de montage courante lorsque les informations de fiabilité de la tâche de montage courante sont améliorées telles que comparées aux informations de fiabilité d'une tâche de montage précédente, et ne fournissent pas les données d'enregistrement (83) lorsque les informations de fiabilité ne sont pas améliorées.

4. Le système de partage de données de forme selon l'une quelconque des revendications 1 à 3, dans lequel
la section de fourniture de données (91) est configurée pour fonctionner dans au moins un de chaque point temporel lorsqu'une répétition de la tâche de montage utilisant les données de forme est terminée, chaque point temporel lorsque le nombre d'utilisation des données de forme est augmenté d'un nombre de fois prédéterminé, et chaque point temporel lorsqu'une période prédéterminée s'est écoulée.

5. Le système de partage de données de forme selon l'une quelconque des revendications 1 à 4, dans lequel
les informations de spécification de composant incluent des informations représentant au moins un d'un modèle et d'un fabricant du composant (4).

6. Le système de partage de données de forme selon l'une quelconque des revendications 1 à 5, dans lequel
les informations d'équipement (76) incluent des informations représentant au moins un d'un dispositif de fourniture de composants pour fournir le composant, d'un outil de montage de composant pour prélever et maintenir le composant issu du dispositif de fourniture de composants dans la tâche de montage, d'une tête de montage (45) pour maintenir et déplacer l'outil de montage de composant, et un dispositif de caméra (5) pour générer une image du composant maintenu par l'outil de montage de composant.

7. Le système de partage de données de forme selon l'une quelconque des revendications 1 à 6, dans lequel
la base de données (82) est installée sur un serveur en cloud (8) accessible au fournisseur de données et à l'utilisateur de données.

8. Procédé de partage de données de forme comprenant :
une étape de fourniture de données de fourniture de données d'enregistrement (83) à laquelle des informations de spécification de composant (75) pour spécifier un composant (4) et des informations d'équipement (76) sur un monteur de composants qui a exécuté une tâche de montage, telles que des informations sur un nom du fabricant, un modèle, une spécification ou une capacité du monteur de composants, sont ajoutées (S21) à des données de forme détenues par un fournisseur de données pour créer les données d'enregistrement (83), les données de forme incluant des informations liées à une forme du composant et présentant un enregistrement d'usage indiquant le nombre de fois que les données de forme ont été utilisées dans la tâche de montage du composant, dans lequel les informations de spécification de composant (75) sont des informations pour spécifier le type du composant, telles qu'un nom du fabricant du composant, un modèle appliqué par le fabricant et une désignation dans le cadre d'une norme ;
une étape de gestion de données de gestion des données d'enregistrement (83) fournies à l'étape de fourniture de données dans une base de données (82) ;
une étape de recherche de données de recherche de données d'enregistrement dans la base de données (82) en utilisant une condition de recherche définie par un utilisateur de données, la condition de recherche incluant au moins une partie des données de forme, des informations de spécification de composant (75), et les informations d'équipement (76) ; et
une étape de partage de données de fourniture des données d'enregistrement (83) extraites par la recherche à l'étape de recherche de données à l'utilisateur de données de sorte à être exploitables par l'utilisateur, et de partage des données de forme entre le fournisseur de données et l'utilisateur de données,
dans lequel l'étape de fourniture de données inclut une suppression (S23), parmi des informations incluses dans les données de forme, d'informations qui ne sont pas associées à la forme issues des données d'enregistrement et que le fournisseur de données ne veut pas divulguer hors des données d'enregistrement,
l'étape de fourniture de données inclut un ajout (S22) d'informations de fiabilité sur une fiabilité de tâche lorsque la tâche de montage est exécutée aux données de forme pour créer les données d'enregistrement,
les informations de fiabilité (77) incluent des informations indiquant au moins un d'un taux de réussite de prélèvement indiquant une probabilité qu'un outil de montage de composant puisse correctement prélever le composant auprès d'un dispositif de fourniture de composants et d'un taux de réussite de montage indiquant une probabilité que l'outil de montage de composant a réussi dans la tâche de montage,
à l'étape de fourniture de données, les données d'enregistrement (83) dans lesquelles les informations de fiabilité (77) ne satisfont pas un critère d'enregistrement prédéterminé ne sont pas fournies, ou à l'étape de gestion de données, la fourniture des données d'enregistrement (83) dans lesquelles les informations de fiabilité (77) ne satisfont pas le critère d'enregistrement prédéterminé n'est pas acceptée ;
dans lequel l'étape de gestion de données inclut une accumulation jusqu'à un nombre prédéterminé de données d'enregistrement en ordre décroissant d'informations de fiabilité, et
quand :
o les données d'enregistrement (83) présentant les mêmes informations de spécification de composant, ou
o les données d'enregistrement (83) présentant les mêmes informations de spécification de composant et les mêmes informations d'équipement,
sont fournies dans une quantité dépassant le nombre prédéterminé,
l'étape de gestion de données inclut une suppression des données d'enregistrement (83) dépassant le nombre prédéterminé dans la base de données (82) dans laquelle les informations de fiabilité sont faibles.
